# FASCICULE DE BREVET EUROPEEN

(11) **EP 1 514 713 B1**
(45) Date de publication et mention de la délivrance du brevet: **18.10.2006**
(21) Numéro de dépôt: 04292024.9
(22) Date de dépôt: 10.08.2004
(51) Int. Cl.: B60J 5/04

(54) **Véhicule automobile, notamment de type cabriolet, pourvu d'un dispositif de sécurité empêchant l'éjection latérale des portes d'un choc frontal**
Cabriolet-Kraftfahrzeug mit einem Sicherheitsteil das die "ejection" der Vordertüre während eines Frontalcrash behindert
Open top vehicle, with security device to prohibit the lateral ejaection of a door during a frontal impact

(30) Priorité: 10.09.2003 FR 0310662
(43) Date de publication de la demande: 16.03.2005
(73) Titulaire: Peugeot Citroën Automobiles S.A., 78140 Vélizy Villacoublay (FR)
(72) Inventeur: Vincenti, Richard, 90300 Valdoie (FR)
(74) Mandataire: Domenego, Bertrand

(56) Documents cités:
- WO-A-02/34557
- DE-A- 19 828 444
- US-B1- 6 601 910

## Description

La présente invention concerne un véhicule automobile, notamment du type à toit amovible, comprenant au moins une porte latérale, et un montant sur lequel est articulée ladite porte latérale.

On a constaté qu'en cas de choc frontal dépassant une certaine intensité, et plus particulièrement lorsque le point d'impact est décalé latéralement par rapport à l'axe du véhicule, l'une au moins des portes latérales pouvait être éjectée vers l'extérieur en se détachant du véhicule.

Dans un tel cas, la porte ainsi éjectée ne joue plus son rôle d'absorption de choc, et fait défaut dans la préservation de l'intégrité de l'habitacle au cours de l'accident.

Ce problème se pose de façon particulièrement aiguë pour des véhicules de type cabriolet, qu'ils aient un toit amovible rigide ou souple. En effet, dans un véhicule cabriolet privé de toit rigide, et en cas d'éjection des portes, l'énergie de choc ne peut être absorbée, dans la section longitudinale du véhicule correspondant à l'habitacle, qu'au niveau du soubassement. Une solution est révélée dans WO02/34557.

L'invention a pour objet de résoudre cet inconvénient, et de proposer un véhicule automobile du type ci-dessus pourvu de moyens permettant une meilleure préservation de l'intégrité de l'habitacle, en cas de choc frontal.

A cet effet, un véhicule conforme à l'invention comprend en outre au moins une paire d'organes de blocage complémentaires, solidaires respectivement de la porte et du montant, dont l'un forme un logement et l'autre une saillie axiale, et susceptibles de passer d'une position dégagée à une position d'engagement axial mutuel définissant une liaison rigide, et ainsi d'empêcher l'éjection de la porte, sous l'effet d'une déformation axiale et/ou d'un déplacement relatif axial de la porte et du montant, lors d'un choc frontal dépassant une intensité prédéterminée.

Grâce à cette disposition, les risques d'éjection de la porte lors d'un choc frontal sont réduits, de sorte que la porte peut assurer sa fonction d'absorption du choc, et ainsi de protection des occupants du véhicule contre l'écrasement.

Le véhicule automobile conforme à l'invention peut en outre présenter l'une ou plusieurs des caractéristique suivantes :
- ledit logement est formé dans le montant, et ladite saillie est un doigt axial fixé rigidement à la porte ;
- le doigt est fixé à la porte par soudage ;
- la porte comprend au moins un raidisseur qui s'étend essentiellement de façon axiale, et auquel est relié rigidement le doigt ;
- le doigt s'étend au voisinage dudit raidisseur ;
- la porte est formée comme un caisson, dans lequel est logé partiellement le doigt, ce dernier faisant partiellement saillie du caisson au travers d'une fenêtre formée dans le caisson, en vis-à-vis dudit logement ;
- le doigt, du côté de son extrémité tournée vers le logement, est effilé et de forme adaptée pour que les tolérances de fabrication du doigt et du logement ne compromettent pas leur engagement mutuel lors d'un choc ; et
- le véhicule est constitué d'un véhicule du type coupé-cabriolet.

Un mode particulier de réalisation de l'invention va maintenant être décrit plus en détail en référence aux dessins annexés, sur lesquels :
- la Figure 1 est une vue schématique de côté de la partie avant de structure et de carrosserie d'un véhicule automobile selon l'invention ;
- la Figure 2 est une vue partielle en perspective, à plus grande échelle, d'une porte, et d'un montant correspondant sur lequel elle est articulée, du véhicule de la Figure 1 ; et
- la Figure 3 est une vue en coupe, dans le plan horizontal passant par le doigt de blocage, de la partie de véhicule représentée sur la Figure 2.

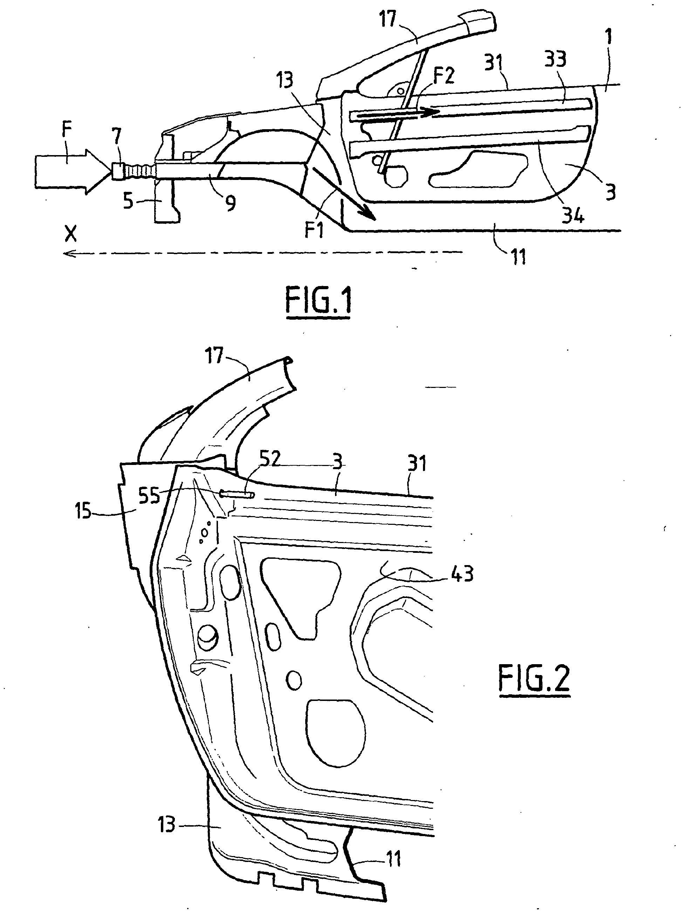

Sur la Figure 1, on a représenté la partie avant d'une carrosserie de véhicule automobile, du type coupé cabriolet, ayant seulement deux portes latérales d'accès à l'habitacle, ainsi qu'un toit amovible. Sur cette Figure, la partie de caisse est représentée en position découverte, le toit étant escamoté.

Sur cette Figure, on a représenté l'axe longitudinal X du véhicule, orienté d'arrière en avant par rapport au sens de marche.

Dans toute la description qui va suivre, les termes de position et d'orientation s'entendront par rapport à cet axe longitudinal. En particulier, le terme « axial » s'entendra d'une direction parallèle, ou sensiblement parallèle, à l'axe longitudinal X.

Comme illustré sur la Figure 1, le véhicule selon le mode de réalisation représenté comprend une caisse 1 définissant intérieurement l'habitacle du véhicule, deux portes latérales 3, et une face avant 5.

Le véhicule comprend entre outre, solidaires de la face avant, une poutre de pare-chocs 7 et deux longerons latéraux 9, reliant la face avant 5 à la caisse 1.

La caisse 1 présente un soubassement 11 formant plancher de l'habitacle, et, du côté avant, deux montants latéraux 13 sur lesquels sont articulées, de façon respective, les portes 3 par l'intermédiaire d'une pièce rigide 15 (Figure 2), appelée « pied », fixée rigidement audit montant.

La caisse 1 présente en outre, solidaires respectivement des montants 13 et dans leur continuité, deux montants de baie 17 latéraux, en saillie essentiellement vers le haut et vers l'arrière.

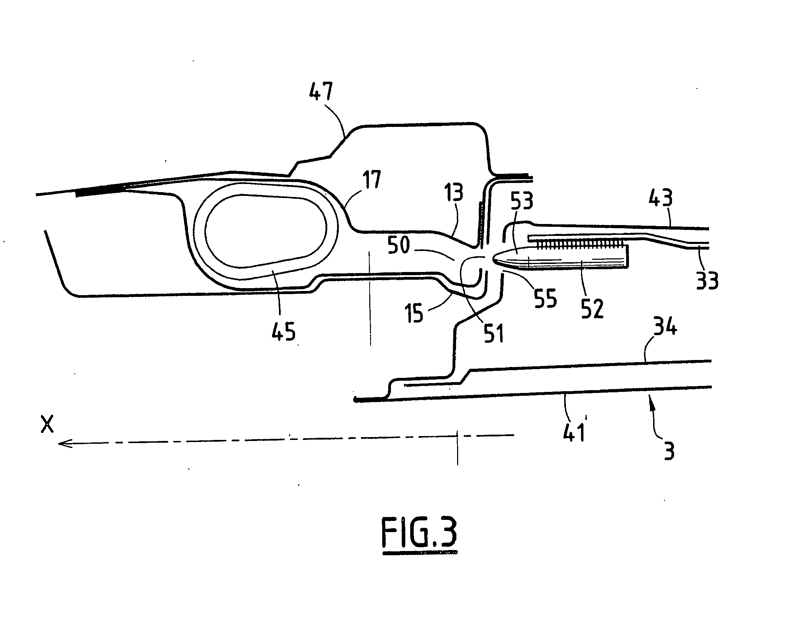

La porte 3 est réalisée sous la forme d'un caisson, comme cela sera mieux vu ultérieurement, notamment sur la Figure 3, ayant un bord supérieur 31. Dans ce caisson sont agencés deux raidisseurs longitudinaux 33, 34 sous la forme de barres de renfort s'étendant d'avant en arrière sensiblement sur toute la longueur de la porte. L'un 33 de ces raidisseurs est agencé au voisinage du bord supérieur de porte 31, et de façon parallèle à ce dernier.

Sur la Figure 1, on a illustré le fait qu'un effort F, appliqué sur la poutre de pare-chocs 7 du véhicule au cours d'un choc frontal, était transmis vers l'arrière du véhicule en cheminant par les longerons 9, et en se répartissant essentiellement selon deux composantes F1, F2, respectivement entre le soubassement 11 et le raidisseur 33 (ou les raidisseurs 33, 34).

On comprend ainsi l'intérêt d'éviter l'éjection de la porte lors d'un choc frontal, afin de conserver une telle répartition des efforts. Les dispositions de l'invention visant à éviter l'éjection de la porte sont visibles sur les Figures 2 et 3, auxquelles on se réfère à présent.

Sur les Figures 2 et 3, on a représenté notamment la zone de liaison entre la porte 3 d'une part, et le montant 13 et le pied 15 correspondants d'autre part, du côté droit du véhicule.

On notera que, par souci de clarté du dessin, les raidisseurs de porte 33, 34 n'ont pas été représentés sur la Figure 2.

De façon classique, la porte 3 est articulée à pivotement sur le montant 13, du côté avant, au moyen de charnières à axe sensiblement vertical qui n'ont pas été représentées.

On voit sur ces Figures 2 et 3 que la porte 3 a une forme de caisson creux, délimité du côté intérieur de l'habitacle par une paroi intérieure 43, et extérieurement par une peau 41(non représentée sur la Figure 2). A l'intérieur du caisson ainsi délimité sont fixés les raidisseurs longitudinaux 33, 34.

Comme cela peut être observé sur la Figure 3, le montant 13 est également creux et contient un raidisseur tubulaire 45. Ce raidisseur 45 s'étend en outre intérieurement sur l'essentiel de la longueur du montant de baie 17.

Une partie arrière d'une doublure d'aile avant droite 47 est fixée extérieurement sur le montant 13 par l'intermédiaire du pied 15.

Sur une face tournée vers l'arrière, le montant 13 et le pied 15 présentent un orifice 51, qui débouche sur le volume intérieur 50 du montant 13. La porte 3 est pourvue d'un doigt de blocage 52 fixé du côté de l'extrémité avant du raidisseur 33, en regard dudit orifice 51.

Le doigt 52 a une forme essentiellement cylindrique, avec son extrémité avant 53 effilée en forme d'ogive, et s'étend axialement en regard de l'orifice 51, essentiellement à l'intérieur du caisson défini par la porte 3. L'extrémité avant ou pointe 53 du doigt 52 fait saillie du volume intérieur du caisson, vers l'avant, au travers d'une fenêtre 55 formée sur une face avant de la doublure 43.

Lorsque la porte est fermée, comme cela a été représenté sur les Figures, et en l'absence de déformation du véhicule, la pointe 53 du doigt s'étend au voisinage de l'orifice 51, sans pénétrer dans ce dernier.

On comprend que le doigt 52 est susceptible de s'engager dans le volume intérieur 50 du montant 13, formant logement avec l'orifice 51, au travers de ce dernier, lors d'une déformation en compression de la caisse 1 et des éléments de carrosserie, à la suite d'un choc frontal subi par le véhicule.

En d'autres termes, lors d'un choc frontal dépassant une intensité prédéterminée, qui provoque une déformation axiale et/ou un déplacement relatif axial de la porte 3 et du montant 13, le doigt 52 est susceptible de passer d'une position dégagée du logement 50, 51 formé par le montant 13, et dont l'accès est défini par l'orifice 51, à une position d'engagement axial mutuel. Cette position d'engagement mutuel définit une liaison rigide entre le doigt 52, donc la porte 3, et le montant 13.

C'est ainsi que les organes de blocage définis par le logement 50, 51 d'une part, et le doigt 52 d'autre part, empêchent l'éjection latérale de la porte 3 lors d'un choc frontal.

On notera que la géométrie du doigt 52, et notamment de la pointe 53 tournée vers l'orifice 51, est prévue pour que les tolérances de fabrication du doigt 52 et du logement 50, 51 ne compromettent pas l'engagement du doigt 52 dans l'orifice 51 lors d'un choc.

On notera également que le doigt 52 s'étend à proximité du raidisseur 33, en l'occurrence de façon adjacente, pour accroître son efficacité à transmettre les efforts au raidisseur lors du choc.

## Revendications

1. Véhicule automobile, notamment du type à toit amovible, comprenant au moins une porte latérale (3), un montant (13) sur lequel est articulée ladite porte latérale, et au moins une paire d'organes de blocage complémentaires (50, 51, 52), solidaires respectivement de la porte (3) et du montant (13), dont l'un forme un logement (50, 51) et l'autre une saillie axiale (52), et susceptibles de passer d'une position dégagée à une position d'engagement axial mutuel définissant une liaison rigide, et ainsi d'empêcher l'éjection de la porte (3), sous l'effet d'une déformation axiale et/ou d'un déplacement relatif axial de la porte (3) et du montant (13), lors d'un choc frontal dépassant une intensité prédéterminée, ledit logement (50, 51) étant formé dans le montant (13), et **caractérisé en ce que** ladite saillie est un doigt axial (52) fixé rigidement à la porte (3).

2. Véhicule automobile suivant la revendication 1, **caractérisé en ce que** le doigt (52) est fixé à la porte par soudage.

3. Véhicule automobile suivant la revendication 1 ou 2, **caractérisé en ce que** la porte (3) comprend au moins un raidisseur (33) qui s'étend essentiellement de façon axiale (X), et auquel est relié rigidement le doigt (52).

4. Véhicule automobile suivant la revendication 3, **caractérisé en ce que** le doigt (52) s'étend au voisinage dudit raidisseur (33).

5. Véhicule automobile suivant l'une quelconque des revendications 1 à 4, **caractérisé en ce que** la porte (3) est formée comme un caisson, dans lequel est logé partiellement le doigt (52), ce dernier faisant partiellement saillie du caisson au travers d'une fenêtre (55) formée dans le caisson, en vis-à-vis dudit logement (50, 51).

6. Véhicule automobile suivant l'une quelconque des revendications 1 à 5, **caractérisé en ce que** le doigt (52), du côté de son extrémité (53) tournée vers le logement (50, 51), est effilé et de forme adaptée pour que les tolérances de fabrication du doigt (52) et du logement (50, 51) ne compromettent pas leur engagement mutuel lors d'un choc.

7. Véhicule automobile suivant l'une quelconque des revendications 1 à 6, **caractérisé en ce qu**'il est constitué d'un véhicule du type coupé-cabriolet.

## Claims

1. Motor vehicle, in particular of the cabriolet type, comprising at least one side door (3), a pillar (13) to which the side door is articulated, and at least one pair of complementary locking elements (50, 51, 52) which are fixedly joined to the door (3) and to the pillar (13), respectively, of which one forms a housing (50, 51) and the other an axial projection (52), and which are capable of moving from a disengaged position to a position of mutual axial engagement which defines a rigid connection and are thus capable of preventing the ejection of the door (3) under the effect of an axial deformation and/or a relative axial displacement of the door (3) and the pillar (13) in the event of a frontal impact which exceeds a predetermined intensity, the housing (50, 51) being formed in the pillar (13), and **characterised in that** the projection is an axial member (52) which is rigidly fixed to the door (3).

2. Motor vehicle according to claim 1, **characterised in that** the member (52) is fixed to the door by means of welding.

3. Motor vehicle according to claim 1 or 2, **characterised in that** the door (3) comprises at least one reinforcement member (33) which extends substantially in an axial manner (X) and to which the member (52) is: rigidly connected.

4. Motor vehicle according to claim 3, **characterised in that** the member (52) extends in the vicinity of the reinforcement member (33).

5. Motor vehicle according to any one of claims 1 to 4, **characterised in that** the door (3) is formed in the manner of a casing, in which the member (52) is partially accommodated, the member protruding partially from the casing through an aperture (55) which is formed in the casing, opposite the housing (50, 51).

6. Motor vehicle according to,any one of claims 1 to 5, **characterised in that** the member (52), at the side of the end (53) thereof directed towards the housing (50, 51), is tapered and of such a form that the production tolerances of the member (52) and the housing (50, 51) do not compromise their mutual engagement during an impact.

7. Motor vehicle according to any one of claims 1 to 6, **characterised in that** it is constituted by a vehicle of the coupé/cabriolet type.

## Patentansprüche

1. Kraftfahrzeug insbesondere der Art Cabriolet mit zumindest einer Seitentür (3), einem Pfosten (13), an welchem die Seitentür gelenkig angebracht ist, und zumindest einem Paar komplementärer Blockierorgane (50, 51, 52), die jeweils einstückig mit der Tür (3) und dem Pfosten (13) ausgebildet sind, und von denen das eine eine Aufnahme (50, 51) bildet und das andere einen axialen Vorsprung (52), und die aus einer entkuppelten Position in eine Position des gegenseitigen axialen Eingriffs übergehen können, wodurch sie eine feste Verbindung definieren und so das Herausdrücken der Tür (3) unter Einwirkung einer axialen Verformung und/oder einer relativen axialen Verschiebung der Tür (3) und des Pfostens (13) während eines Frontalaufpralls, der eine vorbestimmte Stärke übersteigt, verhindern, wobei die Aufnahme (50, 51) in dem Pfosten (13) ausgebildet ist und **dadurch gekennzeichnet, dass** der Vorsprung ein fest an der Tür (3) befestigter, axialer Zapfen (52) ist.

2. Kraftfahrzeug gemäß Anspruch 1, **dadurch gekennzeichnet, dass** der Zapfen (52) an der Tür durch Verschweißung befestigt ist.

3. Kraftfahrzeug gemäß Anspruch 1 oder 2, **dadurch gekennzeichnet, dass** die Tür (3) zumindest eine Aussteifung (33) aufweist, welche sich im Wesentlichen axial (X) erstreckt, und mit welcher der Zapfen (52) fest verbunden ist.

4. Kraftfahrzeug gemäß Anspruch 3, **dadurch gekennzeichnet, dass** sich der Zapfen (52) in der Nähe der Versteifung (33) erstreckt.

5. Kraftfahrzeug gemäß irgendeinem der Ansprüche 1 bis 4, **dadurch gekennzeichnet, dass** die Tür (3) als ein Senkkasten ausgebildet ist, in welchem der Zapfen (52) teilweise gelagert ist, wobei dieser letztere teilweise von dem Senkkasten aus durch ein in dem Senkkasten ausgebildetes Fenster (55) gegenüber der Aufnahme (50, 51) vorspringt.

6. Kraftfahrzeug gemäß irgendeinem der Ansprüche 1 bis 5, **dadurch gekennzeichnet, dass** der Zapfen (52) auf der Seite seines der Aufnahme (50, 51) zugewandten Endes (53) konisch zulaufend ausgebildet ist und eine Form aufweist, die derart eingerichtet ist, dass die Herstellungstoleranzen des Zapfens (52) und der Aufnahme (50, 51) nicht ihren Eingriff ineinander während eines Aufpralls behindern.

7. Kraftfahrzeug gemäß irgendeinem der Ansprüche 1 bis 6, **dadurch gekennzeichnet, dass** es aus einem Fahrzeug der Art Coupé-Cabriolet besteht.
